# EUROPÄISCHE PATENTSCHRIFT

(11) **EP 3 554 865 B1**
(45) Veröffentlichungstag und Bekanntmachung des Hinweises auf die Patenterteilung: **25.08.2021**
(21) Anmeldenummer: 17832948.8
(22) Anmeldetag: 19.12.2017
(51) Int. Cl.: B60C 23/04

(54) **VERFAHREN ZUR FUNKTECHNISCHEN OPTIMIERUNG EINER RADÜBERWACHUNG IN EINEM FAHRZEUG, RADÜBERWACHUNGSSYSTEM EINES FAHRZEUGES SOWIE ELEKTRONISCHE RADEINHEIT UND STEUEREINRICHTUNG FÜR EIN RADÜBERWACHUNGSSYSTEM**
METHOD FOR WIRELESS OPTIMIZATION OF WHEEL MONITORING IN A VEHICLE, A WHEEL MONITORING SYSTEM OF A VEHICLE, AND ELECTRONIC WHEEL UNIT AND CONTROL DEVICE FOR A WHEEL MONITORING SYSTEM
PROCÉDÉ D'OPTIMISATION PAR VOIE RADIO D'UNE SURVEILLANCE DE ROUE DANS UN VÉHICULE, SYSTÈME DE SURVEILLANCE DE ROUE D'UN VÉHICULE AINSI QU'UNITÉ DE ROUE ÉLECTRONIQUE ET DISPOSITIF DE COMMANDE POUR UN SYSTÈME DE SURVEILLANCE DE ROUE

(30) Priorität: 19.12.2016 DE 102016225481
(43) Veröffentlichungstag der Anmeldung: 23.10.2019
(73) Patentinhaber: Continental Automotive GmbH, 30165 Hannover (DE)
(72) Erfinder: FISCHER, Frank, 93057 Regensburg (DE); HAAS, Thomas, 93093 Donaustauf (DE); KRETSCHMANN, Matthias, 93173 Wenzenbach (DE)
(74) Vertreter: Continental Corporation
(86) Internationale Anmeldenummer: PCT/EP2017/083503
(87) Internationale Veröffentlichungsnummer: WO 2018/114924

(56) Entgegenhaltungen:
- DE-A1- 10 342 297
- US-A1- 2012 166 836

## Beschreibung

Die vorliegende Erfindung betrifft Verfahren und Systeme zur Radüberwachung, insbesondere zur Reifendrucküberwachung, in einem mit Fahrzeugrädern ausgestatteten Fahrzeug und hierbei im Besonderen eine funktechnische Optimierung der Radüberwachung.

In dieser Hinsicht betrifft die Erfindung ein Verfahren zur funktechnischen Optimierung einer Radüberwachung, eine elektronische Radeinheit für ein Radüberwachungssystem, einer Steuereinrichtung für ein Radüberwachungssystem sowie ein Radüberwachungssystem, das wenigstens eine derartige elektronische Radeinheit und eine derartige Steuereinrichtung aufweist.

Elektronische Radeinheiten, Steuereinrichtungen und damit realisierte Systeme und Verfahren zur Radüberwachung sind beispielsweise aus der DE 10 2009 059 788 A1 bekannt.

Bei derartigen Reifendrucküberwachungssystemen, oftmals auch als Reifendruckkontrollsysteme oder TPMS (englisch: tire pressure monitoring system) bezeichnet, sind die an den Fahrzeugrädern des Fahrzeuges angeordneten elektronischen Radeinheiten jeweils dazu ausgebildet, als einen Radbetriebsparameter zumindest einen Reifendruck des betreffenden, aus einer Felge und einem daran montierten Reifen gebildeten Fahrzeugrades zu messen.

Jede elektronische Radeinheit sendet während des Überwachungsbetriebes von Zeit zu Zeit Funksignale an eine fahrzeugseitig angeordnete Steuereinrichtung, wobei diese Funksignale eine Information über den zuvor gemessenen Reifendruck beinhalten.

Die Steuereinrichtung des Fahrzeuges ist dazu ausgebildet, die Funksignale der elektronischen Radeinheiten zu empfangen und auszuwerten, so dass z. B. im Falle einer Abnormalität, beispielsweise einemübermäßigen Reifendruckverlust, eine entsprechende Abnormalitätsmeldung erzeugt und z. B. als Warnmeldung an den Fahrer des Fahrzeuges ausgegeben werden kann.

Was die Sendezeitpunkte der von einer elektronischen Radeinheit bei der Radüberwachung gesendeten Funksignale anbelangt, so geht die vorliegende Erfindung davon aus, dass die Funksignale jeweils bei einer von der elektronischen Radeinheit festgelegten Raddrehstellung des betreffenden Fahrzeugrades gesendet werden.

Mit dieser Maßnahme lassen sich verschiedene Vorteile erzielen.

Insbesondere kann diese Maßnahme beispielsweise im Rahmen einer sogenannten Lokalisierung genutzt werden, d. h. einer von der Steuereinrichtung des Fahrzeuges für die empfangenen Funksignale durchgeführten Zuordnung des Funksignals zu einer bestimmten der mehreren verbauten elektronischen Radeinheiten bzw. einer Zuordnung zu einer entsprechenden Verbauposition der sendenden Radeinheit. Bei einem herkömmlichen vierrädrigen PKW sind dies z. B. die Positionen "vorne links", "vorne rechts, "hinten links" und "hinten rechts". Die Zuordnung beruht hierbei auf einem Vergleich bzw. einer Ermittlung einer Korrelation zwischen Raddrehstellungen und/oder Raddrehgeschwindigkeiten, die einerseits mittels der elektronischen Radeinheiten und andererseits mittels einer fahrzeugfest angeordneter Sensorik, z. B.

Raddrehzahlsensoren eines Antiblockiersystems (ABS), erfasst wurden.

Die elektronischen Radeinheiten sollten dabei die Funksignale mit möglichst geringer Funksignalstärke senden, z. B. um gesetzliche Vorgaben zu erfüllen, um wenig Störstrahlung zu erzeugen und um eine hohe Lebensdauer der in der Regel batteriebetriebenen elektronischen Radeinheiten sicherzustellen.

Andererseits muss die Funksignalstärke senderseitig groß genug gewählt werden, um einen hinreichend guten Empfang der Funksignale zu gewährleisten.

Vor diesem Hintergrund ergibt sich bereits bei der Konzeption eines mit einem Radüberwachungssystem auszustattenden Fahrzeuges ein beträchtlicher Entwicklungsaufwand zur Auffindung einer oder mehrerer Verbaupositionen eines oder mehrerer Funkempfangseinheiten der fahrzeugseitigen Steuereinrichtung.

Erschwerend kommt hinzu, dass die funktechnische Leistungsfähigkeit der Funksignalübertragung im späteren Fahrbetrieb des Fahrzeuges gewissen Variationen unterliegt. Einflussfaktoren für die Übertragungsqualität können sich dynamisch während der Fahrt verändern, z. B. Einfederungsvorgänge der Radaufhängungen, welche die Positionen der Sender der elektronischen Radeinheiten bezüglich des relativ zu der Fahrzeugkarosserie stationär verbauten Empfängers beeinflussen, oder für jeden Fahrbetriebsbeginn variieren, wie z. B. Einfederungszustände aufgrund einer bestimmten Fahrzeugbeladung und Anzahl von Passagieren.

In diesem Zusammenhang ist auch das erwähnte Senden der Funksignale jeweils bei einer von der elektronischen Radeinheit festgelegten Raddrehstellung von großer Bedeutung, da es funktechnisch betrachtet für jedes Fahrzeugrad einerseits gute Raddrehstellungen, die zu einer hohen Funksignalstärke am Ort des Empfängers führen, und andererseits schlechte Raddrehstellungen, die zu einer niedrigen Funksignalstärke am Ort des Empfängers führen, bis hin zu sogenannten black spots, bei welchen keine zuverlässige Funksignalübertragung mehr gewährleistet ist, gibt.

Bei der US 6 972 672 B1 werden derartige Variationen der Funksignalstärke am Ort des Empfängers während der Raddrehung für die oben bereits erwähnte Lokalisierung genutzt.

Ferner wird in der US 2016/0001614 A1 davon ausgegangen, dass bei einem Fahrzeugstillstand eine gewisse Wahrscheinlichkeit dafür besteht, dass eine elektronische Radeinheit sich in einer funktechnisch schlechten Raddrehstellung, insbesondere in einer black spot Raddrehstellung befindet, und für diesen Fall wird vorgeschlagen, eine über die Funkverbindung übertragene Bitrate im Vergleich zu einer Bitrate der Funkdatenübertragung bei fahrendem Fahrzeug zu reduzieren.

Aus der DE 103 42 297 A1 ist ein Verfahren gemäß dem Oberbegriff des Anspruchs 1 bekannt.

Aus der US 2012/166836 A1 ist eine batteriebetriebene Vorrichtung bekannt, die einen Empfänger enthält zum Empfangen einer Sendung, die eine Postambel enthält. Ein Sensor in einem Reifen misst einen Parameter des Reifens und gibt Daten aus, die den Parameter kennzeichnen. Ein Mikroprozessor ist mit dem Empfänger und dem Sensor verbunden. Der Mikroprozessor ist so konfiguriert, dass er periodisch teilweise aufwacht, um zu bestimmen, ob die Sendung wahrscheinlich ein Vorwärtsverbindungspaket (FLP) ist, indem er die Postambel untersucht und die Daten in einem Rückwärtsverbindungspaket (RLP) als Reaktion auf die Bestätigung, dass die Sendung ein FLP ist, überträgt.

Es ist eine Aufgabe der vorliegenden Erfindung, eine funktechnische Optimierung einer Radüberwachung in einem Fahrzeug bereitzustellen.

Ein erster Aspekt der Erfindung betrifft ein Verfahren zur funktechnischen Optimierung einer Radüberwachung in einem mit Fahrzeugrädern ausgestatteten Fahrzeug, wobei zur Überwachung wenigstens eines der Fahrzeugräder von einer an dem betreffenden Fahrzeugrad angeordneten elektronischen Radeinheit wenigstens ein Radbetriebsparameter des Fahrzeugrades erfasst wird und Funksignale, die eine Information über den wenigstens einen erfassten Radbetriebsparameter beinhalten, jeweils bei einer von der elektronischen Radeinheit festgelegten Raddrehstellung des Fahrzeugrades gesendet werden, wobei die Funksignale von einer Steuereinrichtung des Fahrzeuges empfangen und ausgewertet werden. Für die funktechnische Optimierung der Radüberwachung werden während eines Betriebs des Fahrzeuges mittels der elektronischen Radeinheit mehrere Funksignale bei voneinander verschiedenen Raddrehstellungen des Fahrzeugrades gesendet, wobei die mehreren Funksignale mittels der Steuereinrichtung empfangen und hinsichtlich deren jeweiliger Funksignalstärke bewertet werden, wobei mittels der Steuereinrichtung ein Optimierungsfunksignal an die elektronische Radeinheit gesendet wird, wobei das Optimierungsfunksignal eine basierend auf der Bewertung der mehreren Funksignale gebildete Optimierungsinformation beinhaltet, und wobei mittels der elektronischen Radeinheit das Optimierungsfunksignal empfangen und die darin enthaltende Optimierungsinformation bei der Festlegung der Raddrehstellung des Fahrzeugrades für nachfolgend zu sendende Funksignale berücksichtigt wird.

Mittels des genannten Aspekts der Erfindung lässt sich vorteilhaft eine automatische Verbesserung (Optimierung) der Leistungsfähigkeit der Funkübertragung der bei Radüberwachungssystemen verwendeten Funksignale realisieren, indem eine dynamische Einstellung der zum Senden der Funksignale festgelegten Raddrehstellung erfolgt. Insbesondere kann damit in einfacher Weise das Senden bei den erwähnten black spot-Raddrehstellungen vermieden werden. Weitere Vorteile der Erfindung bestehen z. B. darin, dass ein Radüberwachungssystem unkomplizierter konzipiert werden kann und senderseitig vorzusehende Funksignalstärken tendenziell reduziert werden können.

In einer Ausführungsform des Verfahrens wird mittels der elektronischen Radeinheit und/oder mittels der Steuereinrichtung ein Fahrbetriebsbeginn des Fahrzeuges erfasst und infolge einer Erfassung des Fahrbetriebsbeginns die funktechnische Optimierung der Radüberwachung ausgelöst.

Eine Erfassung des Fahrbetriebsbeginns mittels der Steuereinrichtung des Fahrzeuges kann z. B. basierend auf einer Auswertung von Sensorsignalen von fahrzeugfest angeordneten Raddrehzahlsensoren realisiert sein, mit denen die Raddrehstellungen und/oder die Raddrehgeschwindigkeiten der einzelnen Fahrzeugräder und mithin eine Fahrzeuggeschwindigkeit ermittelt werden können.

Eine Erfassung des Fahrbetriebsbeginns mittels der elektronischen Radeinheit kann z. B. dadurch realisiert sein, dass die elektronische Radeinheit mit einem Beschleunigungssensor zur Messung einer Beschleunigung, z. B. einer Radialbeschleunigung, ausgestattet ist und die elektronische Radeinheit einen Fahrbetriebsbeginn durch eine Auswertung des von dem Beschleunigungssensor bereitgestellten Sensorsignals detektiert.

In einer Ausführungsform wird mittels der Steuereinrichtung ein Auslösefunksignal an die elektronische Radeinheit gesendet, um die funktechnische Optimierung der Radüberwachung auszulösen.

Das Auslösefunksignal kann von der Steuereinrichtung z. B. im Falle eines von der Steuereinrichtung erfassten Fahrbetriebsbeginns gesendet werden. Alternativ oder zusätzlich können auch ein oder mehrere andere Ereignisse, z. B. ein durch einen Benutzer eingegebener Auslösebefehl, definiert sein, die das Senden des Auslösefunksignales zur Folge haben.

In einer Ausführungsform wird bei der Radüberwachung mittels der Steuereinrichtung fortlaufend die Funksignalstärke der mehreren empfangenen Funksignale bewertet, und es werden die Schritte für die funktechnische Optimierung der Radüberwachung durchgeführt, sobald die Funksignalstärke ein Schwellwertkriterium für einen ordnungsgemäßen Betrieb nicht mehr erfüllt, d.h. falls die Funksignalstärke zumindest eines der mehreren empfangenen Funksignale einen vorbestimmten Schwellwert unterschreitet. Auch infolge eines solchen Ereignisses kann ein Senden des erwähnten Auslösefunksignals von der Steuereinrichtung zu der elektronischen Radeinheit vorgesehen sein.

In einer Ausführungsform wird zudem ein momentaner Beladungszustand des Fahrzeuges ermittelt und die Schritte für die funktechnische Optimierung der Radüberwachung werden durchgeführt, falls eine Änderung des momentanen Beladungszustands des Fahrzeuges ermittelt wird. Dabei wird von der Überlegung ausgegangen, dass ein geänderter Beladungszustand des Fahrzeuges eine Änderung der guten Raddrehstellungen, die zu einer hohen Funksignalstärke am Ort des Empfängers führen, und/oder der schlechten Raddrehstellungen, die zu einer niedrigen Funksignalstärke am Ort des Empfängers führen, bewirken kann. Beispielsweise kann ein neu in das Fahrzeug eingeladener metallischer Gegenstand, z.B. eine Metallplatte, zur Ausbildung eines neuen black spot führen.

In einer weiteren Ausführungsform beinhaltet das von der Steuereinrichtung gesendete Auslösefunksignal eine Adressierung, z. B. eine oder mehrere Identifikationscodes zur Identifikation einer oder mehrerer elektronischer Radeinheiten, um die Optimierung gezielt für eine oder mehrere elektronische Radeinheiten entsprechend der Adressierung auszulösen.

In einer Ausführungsform wird die funktechnische Optimierung der Radüberwachung getrennt von der Radüberwachung durchgeführt, indem die für die Optimierung mittels der elektronischen Radeinheit gesendeten mehreren Funksignale nur zu diesem Zweck der Optimierung ausgestaltet sind und keine Information über den wenigstens einen erfassten bzw. überwachten Radbetriebsparameter beinhalten, ggf. aber im Zusammenhang mit der Optimierung nützliche Daten beinhalten können.

In einer anderen Ausführungsform wird die funktechnische Optimierung der Radüberwachung in die Radüberwachung integriert durchgeführt, gewissermaßen als Teilfunktionalität der Radüberwachung, indem die für die Optimierung mittels der elektronischen Radeinheit gesendeten mehreren Funksignale gleichzeitig die zur Durchführung der Radüberwachung erforderlichen Funksignale, die eine Information über den wenigstens einen erfassten Radbetriebsparameter beinhalten, darstellen.

Darüber hinaus sind auch Mischformen der beiden vorgenannten Alternativen denkbar, nämlich bei denen nur ein Teil der für die Optimierung gesendeten Funksignale gleichzeitig Funksignale der Radüberwachung darstellen.

In einer Ausführungsform beinhaltet die mittels der Steuereinrichtung durchgeführte Bewertung der mehreren Funksignale eine Messung der jeweiligen Funksignalstärke der mehreren Funksignale, also z. B. eine Messung einer Empfangsantennensignalstärke, z. B. auf einer für die Funksignale verwendeten Trägerfrequenz.

Alternativ oder zusätzlich kann die Bewertung der Funksignalstärke z. B. mit Hilfe einer Erfassung einer Datenfehlerrate durchgeführt werden, d.h. die Bewertung der mehreren Funksignale mittels der Steuereinrichtung kann eine Erfassung einer Datenfehlerrate beinhalten. Hierzu kann auf Verfahren zur Fehlererkennung und/oder Fehlerkorrektur zurückgegriffen werden. Derartige Verfahren beruhen typischerweise darauf, dass den in dem Funksignal enthaltenen eigentlichen Nutzdaten zusätzlich redundante Daten hinzugefügt werden, welche es empfängerseitig ermöglichen, fehlerhaft übertragene Nutzdaten zu erkennen bzw. zu korrigieren.

Bei dem Verfahren zur funktechnischen Optimierung der Radüberwachung werden in einem ersten Schritt mittels der elektronischen Radeinheit mehrere Funksignale bei voneinander verschiedenen Raddrehstellungen gesendet.

Bevorzugt handelt es sich um mindestens drei Funksignale, weiter bevorzugt um mindestens sechs Funksignale, die bevorzugt allesamt senderseitig mit der gleichen Funksignalstärke versendet werden.

Die für diese Funksignale verschiedenen Raddrehstellungen können jeweils an beliebiger Stelle des 360°-Vollkreises (bezogen auf eine Radumdrehung) festgelegt werden.

In einer Ausführungsform werden die Raddrehstellungen aus einer Mehrzahl von vorgegebenen Raddrehstellungen ausgewählt, z. B. aus winkeläquidistant über den 360°-Vollkreis verteilt vorgesehenen Stellungen, z. B. im Abstand von 5°, 10° oder 20°.

In einer Ausführungsform werden die Raddrehstellungen in zufälliger Weise festgelegt. Alternativ ist auch eine systematische Festlegung möglich, etwa gemäß eines vorgegebenen Schemas.

In einer Ausführungsform bilden die Raddrehstellungen eine Folge von winkeläquidistant liegenden Stellungen.

In einer Ausführungsform ist wenigstens ein gegenseitiger Abstand zwischen den Raddrehstellungen von unmittelbar aufeinanderfolgenden Funksignalen kleiner als 360°. Die dementsprechend relativ rasche Aufeinanderfolge der Funksignale minimiert vorteilhaft Verfälschungen des Optimierungsergebnisses z. B. aufgrund von allmählich sich verändernden funktechnischen Gegebenheiten.

In einer bevorzugten Ausführungsform liegen die Raddrehstellungen allesamt in einem sich über maximal zwei Radumdrehungen, d.h. 720°, erstreckenden Winkelbereich, weiter bevorzugt in einem sich über maximal eine Radumdrehung, d.h. 360°, erstreckenden Winkelbereich.

In einer spezielleren Ausführungsform ist vorgesehen, dass für die Optimierung n Funksignale bei n verschiedenen Raddrehstellungen gesendet werden, wobei gegenseitige Abstände zwischen aufeinanderfolgenden Funksignalen 360°/n betragen, beispielsweise 36 Funksignale in einem jeweiligen Abstand von 10°.

Eine Information über die bei der funktechnischen Optimierung verwendeten Raddrehstellungen kann in der elektronischen Radeinheit zumindest temporär, z. B. bis zum Abschluss der Optimierung, gespeichert werden. Dies ist unter Umständen sogar erforderlich, wenn nämlich z. B. bedingt durch die konkrete Art der zurückgesendeten Optimierungsinformation die elektronische Radeinheit diese Information benötigt, um den Optimierungsvorgang abzuschließen. Hierzu ein Beispiel: Wenn die von der Steuereinrichtung zurückgesendete Optimierungsinformation angibt, dass Funksignal Nr. 3 optimal war, dann muss die elektronische Radeinheit unter Umständen wissen, bei welcher Raddrehstellung innerhalb des 360°-Vollkreises das Funksignal Nr. 3 zuvor gesendet wurde.

Alternativ oder zusätzlich kann eine solche Information über die verwendeten Raddrehstellungen auch z.B. als Daten codiert in die Funksignale mit aufgenommen werden. In diesem Fall könnte die von der Steuereinrichtung zurückgesendete Optimierungsinformation sich z. B. auf diese Angaben beziehen, wie z. B. "Das bei der Raddrehstellung von 35° gesendete Funksignal war optimal" (alternativ oder zusätzlich z. B.: " Das bei der Raddrehstellung von 175° gesendete Funksignal war besonders schlecht").

Eine im Rahmen der Erfindung für die fahrzeugseitige Steuereinrichtung hinreichende Kenntnis der einzelnen verwendeten Raddrehstellungen lässt sich auch z. B. dadurch realisieren, dass in der Steuereinrichtung und in der elektronischen Radeinheit eine synchronisierte Zeitmessung durchgeführt wird, so dass die Steuereinrichtung bereits anhand des Empfangszeitpunktes eines Funksignals, der im Wesentlichen dem Sendezeitpunkt dieses Funksignals entspricht, eine Information über die betreffende Raddrehstellung erhält. In diesem Fall könnte die von der Steuereinrichtung zurückgesendete Optimierungsinformation z.B. zeitbezogene Angaben zurückliefern, wie z. B. "Das vor 3,1 Sekunden gesendete Funksignal war optimal; das vor 0,9 Sekunden gesendete Funksignal war am schlechtesten".

In diesem Zusammenhang ist anzumerken, dass bei Vorliegen einer gemeinsamen Zeitbasis in der Steuereinheit und der elektronischen Radeinheit jede bestimmte Raddrehstellung im Sinne der vorliegenden Anmeldung alternativ zu der Angabe eines Winkels auch durch die Angabe eines Zeitpunktes dargestellt werden kann.

Jedenfalls wird mittels des zurückgesendeten Optimierungsfunksignals eine Information an die elektronische Radeinheit übermittelt, anhand derer mit oder ohne einen Rückgriff auf temporär in der elektronischen Radeinheit gespeicherte Information die elektronische Radeinheit die optimierten Raddrehstellungs-Festlegungen für nachfolgend bei der Radüberwachung zu sendende Funksignale bestimmen kann.

Der Begriff "funktechnische Optimierung" soll im Rahmen der vorliegenden Anmeldung bedeuten, dass damit versucht bzw. bewerkstelligt wird, durch eine Anpassung derjenigen Raddrehstellung bzw. derjenigen Raddrehstellungen, die für nachfolgend zu sendende Funksignale festgelegt werden, die Funksignalstärke am Ort der fahrzeugseitigen Empfangseinrichtung der Steuereinrichtung auch ohne eine Erhöhung der senderseitigen Funksignalstärke zumindest tendenziell zu verbessern.

Bei einer Auswertung des Optimierungsfunksignals können ganz prinzipiell eine oder mehrere zur Informationsübermittlung genutzte Eigenschaften berücksichtigt werden, insbesondere ein Zeitpunkt des Optimierungsfunksignalbeginns; ein Zeitpunkt des Optimierungsfunksignalendes; eine oder mehrere in dem Funksignal detektierbare Zeitdifferenzen; ein Inhalt, insbesondere z. B. ein digital codierter Inhalt, bzw. enthaltene Daten.

Alternativ oder zusätzlich zu einer Information über die verwendete Raddrehstellung als Dateninhalt eines betreffenden Funksignals können auch andere Daten in den Funksignalen codiert enthalten sein, insbesondere z. B. jeweils ein Identifikationscode der betreffenden elektronischen Radeinheit und/oder ein Kennzeichen, das das Funksignal als ein im Rahmen der Optimierung gesendetes Funksignal kennzeichnet, und/oder z. B. eine Funksignalnummer oder eine andere Ordnungsgröße, die für die einzelnen bei der Optimierung gesendeten Funksignale z. B. fortlaufend vergeben wird.

In einem zweiten Schritt der funktechnischen Optimierung werden die Funksignale mittels der Steuereinrichtung empfangen und hinsichtlich deren jeweiliger Funksignalstärken bewertet.

Wie bereits erläutert kann hierzu insbesondere eine direkte Messung der Funksignalstärken oder z. B. eine indirekte Messung anhand einer gemessenen Datenfehlerrate vorgesehen sein. Bei der Art und Weise der Bewertung kommt es letztlich darauf an, einen Parameter zu erfassen bzw. zu quantifizieren, der ein Maß für die funktechnische Übertragungsqualität kennzeichnet.

In einem dritten Schritt der Optimierung wird mittels der Steuereinrichtung ein Optimierungsfunksignal an die elektronische Radeinheit gesendet, das eine basierend auf der Bewertung der mehreren Funksignale gebildete Optimierungsinformation beinhaltet.

Für die Art und Weise der Bildung bzw. den konkreten Inhalt der Optimierungsinformation gibt es vielfältige Möglichkeiten, wobei hierzu auch auf die oben bereits gegebenen Erläuterungen verwiesen wird.

Eine Möglichkeit besteht z. B. darin, für jedes Funksignal das Bewertungsergebnis als solches in die Optimierungsinformation mit aufzunehmen, also z. B. quantitative Maße für die jeweils empfangene Funksignalstärke und/oder für die jeweilige Datenfehlerrate.

Eine andere Möglichkeit besteht darin, das Bewertungsergebnis zusammengefasst bzw. vereinfacht in die Optimierungsinformation mit aufzunehmen, z. B. unter Verwendung einer Klassifizierung für die erfasste Funksignalstärke jedes Funksignals, wie z. B. "gut", "mittel", "schlecht".

Noch knapper kann die Optimierungsinformation z. B. lediglich angeben, für welches bzw. welche Funksignale hohe oder maximale Funksignalstärken erfasst wurden und/oder für welches bzw. welche Funksignale niedrige oder minimale Funksignalstärken erfasst wurden (z. B. "höchste Funksignalstärken bei Funksignalen Nr. 2, 3 und 4; niedrigste Funksignalstärken bei Funksignalen Nr. 15, 16 und 17").

Schließlich sollte die Optimierungsinformation oder das diese Information beinhaltende Optimierungsfunksignal zweckmäßigerweise eine Adressierung, z. B. einen Identifikationscode der betreffenden elektronischen Radeinheit, beinhalten, um im Falle mehrerer an dem Fahrzeug verbauter elektronischer Radeinheiten mit der Optimierungsinformation die richtige Radeinheit anzusprechen.

In einem vierten Schritt der Optimierung wird schließlich mittels der elektronischen Radeinheit das Optimierungsfunksignal empfangen und die darin enthaltende Optimierungsinformation bei der Festlegung bzw. den Festlegungen der Raddrehstellung des betreffenden Fahrzeugrades für nachfolgend bei der Radüberwachung zu sendende Funksignale berücksichtigt.

Hierbei kann z. B. ein in der Optimierungsinformation enthaltendes Bewertungsergebnis zum Anlass genommen werden, seitens der betreffenden elektronischen Radeinheit eine oder mehrere Raddrehstellungen mit schlechtem Bewertungsergebnis von den nachfolgenden Festlegungen der Raddrehstellung auszuschließen und/oder eine oder mehrere Raddrehstellungen mit gutem Bewertungsergebnis bei den nachfolgenden Festlegungen zu priorisieren, also insbesondere z. B. nachfolgend nur bei einer oder mehrerer dieser als gut bzw. am besten bewerteten Raddrehstellungen Funksignale der Radüberwachung zu senden.

Alternativ zur vorstehend erläuterten Variante, in dem dritten Schritt lediglich ein Bewertungsergebnis in die Optimierungsinformation mit aufzunehmen und in dem vierten Schritt eine dementsprechende Maßnahme, z. B. einen Ausschluss und/oder eine Priorisierung von Raddrehstellungen, vorzunehmen, könnte letztere Definition der Maßnahme auch bereits in dem dritten Schritt seitens der fahrzeugseitigen Steuereinrichtung erfolgen und als Steuerungsbefehl für die betreffende Radeinheit in die Optimierungsinformation mit aufgenommen werden.

Das Verfahren zur Radüberwachung, das durch eine funktechnische Optimierung verbessert wird, kann insbesondere z. B. bei einem PKW, insbesondere einem vierrädrigen PKW, oder einem LKW eingesetzt werden und beispielsweise zumindest eine Reifendrucküberwachung beinhalten.

Alternativ oder zusätzlich zum Reifendruck können auch andere Radbetriebsparameter überwacht werden, wie z. B. eine Reifentemperatur. Alternativ oder zusätzlich kann als Radbetriebsparameter z. B. auch eine Raddrehstellung und und/oder eine Raddrehgeschwindigkeit des betreffenden Fahrzeugrades erfasst und mittels der Funksignale eine entsprechende Information hierüber an die Steuereinrichtung des Fahrzeuges übermittelt werden.

Bei den zur Radüberwachung gesendeten Funksignalen handelt es sich bevorzugt um digital codierte Signale, z. B. Funkdatentelegramme. Entsprechendes gilt für die zur funktechnischen Optimierung gesendeten Funksignale sowie auch für das bereits erwähnte Auslösefunksignal.

Die bei der Radüberwachung gesendeten Funksignale bzw. Funkdatentelegramme können von Zeit zu Zeit gemäß einer Sendestrategie gesendet werden und können zusätzlich zu der Information über den wenigstens einen erfassten Radbetriebsparameter insbesondere z. B. auch eine Radinformation beinhalten. Eine derartige Information, z. B. betreffend eine Felge und/oder betreffend einen daran montierten Reifen, kann z. B. durch Werkstattpersonal bei bzw. nach einer Neumontage oder Ummontage von Rädern bzw. Reifen in die elektronische Radeinheit eingespeichert werden. Die Übertragung derartiger Informationen z. B. zumindest einmalig nach einem Fahrtbeginn des Fahrzeuges zu der Steuereinrichtung des Fahrzeuges besitzt z. B. den Vorteil, dass damit Sicherheits- und/oder Komfortfunktionen des Fahrzeuges wie z. B. ABS, ESP etc. durch eine Anpassung an die Radausstattung des Fahrzeuges optimiert eingestellt werden können.

Die elektronische Radeinheit kann z. B. batteriebetrieben sein und z. B. im Falle eines aus einer Felge und einem daran montierten Reifen gebildeten Fahrzeugrades an der Felge oder an einem Ventilschaft oder an dem Reifen befestigt sein, z. B. an einer Innenseite einer Reifenlauffläche des Reifens.

Die elektronische Radeinheit kann zum Erfassen des wenigstens einen Radbetriebsparameters wenigstens einen Sensor zur Messung des oder der Radbetriebsparameter aufweisen.

Bevorzugt weist die elektronische Radeinheit eine programmgesteuerte Rechnereinheit mit einer zugeordneten Speichereinheit auf, z. B. um Sensorsignale eines oder mehrerer Sensoren einer weiteren Verarbeitung und/oder Auswertung zu unterziehen, und um die mittels der Funksignale zu der Steuereinrichtung des Fahrzeuges zu übertragenden Informationen z. B. in Form von Datentelegrammen mit digital codierten Informationen zu erzeugen. In der Speichereinheit können ein den Betrieb der Rechnereinheit steuernder Programmcode und auch weitere Daten gespeichert sein.

Weitere in der Speichereinheit der elektronischen Radeinheit gespeicherte Daten können insbesondere Raddaten beinhalten. Darunter sind ganz allgemein an dem betreffenden Fahrzeugrad messbare physikalische Eigenschaften, z. B. Reifenabmessungen wie Reifendurchmesser etc., sowie sonstige Eigenschaften des betreffenden Fahrzeugrades, z. B. Hersteller, Reifentyp, DOT-Code etc., zu verstehen, welche im Wesentlichen lediglich von der Beschaffenheit des Rades selbst abhängen bzw. nicht unmittelbar von dem aktuellen Betrieb des Fahrzeugrades abhängen. Derartige Raddaten können z. B. von Werkstattpersonal im Rahmen eines Rad- bzw. Reifenwechsels in die betreffende elektronische Radeinheit eingespeichert werden.

Außerdem kann die Speichereinheit der elektronischen Radeinheit dazu genutzt werden, die mittels der funktechnischen Optimierung aufgefundene und für nachfolgend zu sendende Funksignale festzulegende Raddrehstellung abzuspeichern. Nach jeder weiteren Durchführung einer solchen funktechnischen Optimierung kann die gespeicherte Raddrehstellung z. B. überschrieben und damit aktualisiert werden.

Schließlich weist die elektronische Radeinheit beispielsweise eine Funksende- und Empfangseinrichtung zum Senden der Funksignale im Rahmen der Radüberwachung und/oder der funktechnischen Optimierung und zum Empfangen des Optimierungsfunksignals auf.

Die Steuereinrichtung weist bevorzugt eine programmgesteuerte Rechnereinheit mit einer zugeordneten Speichereinheit auf. In der Speichereinheit können ein den Betrieb der Rechnereinheit steuernder Programmcode und auch weitere Daten gespeichert sein, wie insbesondere z. B. die von der elektronischen Radeinheit z. B. bei jedem Fahrtbeginn übermittelten Raddaten.

Ferner weist die Steuereinrichtung beispielsweise eine Funksende- und Empfangseinrichtung zum Empfangen der Funksignale von der elektronischen Radeinheit im Rahmen der Radüberwachung und/oder der funktechnischen Optimierung und zum Senden von Optimierungsfunksignalen an die elektronische Radeinheit auf.

Bevorzugt ist die Steuereinrichtung ferner dazu ausgebildet, bei der Radüberwachung mehrerer Fahrzeugräder von den elektronischen Radeinheiten jeweils mit Hilfe der Funksignale an die Steuereinrichtung gesendete und die elektronischen Radeinheiten jeweils identifizierende Identifikationscodes zu verwenden, um anhand dieser Identifikationscodes eine Zuordnung der einzelnen empfangenen Funksignale bzw. der darin enthaltenen Daten zu einer jeweiligen Verbauposition des betreffenden Fahrzeugrades vornehmen, was auch als Lokalisierung bezeichnet wird.

Die hierbei erfolgende Zuordnung zwischen den Identifikationscodes und den Verbaupositionen (wie z. B. "vorne links", "vorne rechts, "hinten links", "hinten rechts") kann z. B. insbesondere auf einem Vergleich bzw. einer Ermittlung und Auswertung einer Korrelation zwischen Raddrehstellungen und/oder Raddrehgeschwindigkeiten beruhen, die mittels der elektronischen Radeinheiten und zudem mittels einer fahrzeugfest angeordneter Sensorik, z. B. mittels Raddrehzahlsensoren, erfasst wurden.

Ein mit wenigstens einer elektronischen Radeinheit der hier beschriebenen Art und/oder einer Steuereinrichtung der hier beschriebenen Art gebildetes Radüberwachungssystem kann insbesondere zumindest die Funktionalität einer Reifendrucküberwachung besitzen und somit ein Reifendrucküberwachungssystem (TPMS) bilden.

Alternativ oder zusätzlich zu der Erfassung des Reifendrucks an dem betreffenden Fahrzeugrad können jedoch auch andere Radbetriebsparameter des Fahrzeugrades erfasst und zur Erzeugung der entsprechenden Funksignale herangezogen werden, wie z. B. eine Reifentemperatur und/oder eine Beschleunigung an der Anordnungsstelle der elektronischen Radeinheit.

Mittels der Erfassung einer Beschleunigung, insbesondere z. B. einer Radialbeschleunigung, kann durch eine entsprechende Auswertung des Sensorsignals vorteilhaft auch eine momentane Drehstellung und/oder eine momentane Drehgeschwindigkeit des betreffenden Fahrzeugrades bestimmt werden. Die Drehstellung und/oder die Drehgeschwindigkeit können dann z. B. als weitere erfasste Radbetriebsparameter bei der Bildung der Funksignale berücksichtigt werden. Eine in dieser Weise erfasste Drehstellung des Fahrzeugrades kann insbesondere dazu genutzt werden, das Senden der einzelnen Funksignale bei einer jeweils festgelegten Raddrehstellung zu realisieren.

Der Begriff "Radbetriebsparameter" beinhaltet allgemein jede an dem betreffenden Fahrzeugrad messbare und entsprechend einem Fahrbetrieb veränderbare physikalische Größe, z. B. den Reifendruck, die Reifentemperatur, eine Drehgeschwindigkeit etc.

Die bei der Radüberwachung gesendeten Funksignale beinhalten Information über den oder die betreffenden Radbetriebsparameter, z. B. Reifendruckmesswerte, Reifentemperaturmesswerte, Drehgeschwindigkeitsmesswerte etc., und gegebenenfalls auch über wenigstens eine daraus abgeleitete Größe, wie z. B. einen auf eine vorgegebene Temperatur korrigierten Reifendruck.

Zusätzlich zum Senden derartiger den Radbetrieb betreffender Informationen an die Steuereinrichtung kann mittels der Funksignale auch eine Übermittlung der vorerwähnten Raddaten an die Steuereinrichtung vorgesehen sein.

Ein zweiter Aspekt der Erfindung betrifft eine elektronische Radeinheit für ein Radüberwachungssystem eines mit Fahrzeugrädern ausgestatteten Fahrzeuges, wobei die elektronische Radeinheit dazu ausgebildet ist, an einem der Fahrzeugräder angeordnet wenigstens einen Radbetriebsparameter des Fahrzeugrades zu erfassen und Funksignale, die eine Information über den wenigstens einen erfassten Radbetriebsparameter beinhalten, jeweils bei einer von der elektronischen Radeinheit festgelegten Raddrehstellung des Fahrzeugrades an eine zum Empfangen und Auswerten der Funksignale ausgebildete Steuereinrichtung des Fahrzeuges zu senden. Die elektronische Radeinheit ist ferner dazu ausgebildet, für eine funktechnische Optimierung der Radüberwachung mehrere Funksignale bei voneinander verschiedenen Raddrehstellungen des Fahrzeugrades zu senden und ein daraufhin von der Steuereinrichtung gesendetes Optimierungsfunksignal zu empfangen und eine darin enthaltende Optimierungsinformation bei der Festlegung der Raddrehstellung des Fahrzeugrades für nachfolgend zu sendende Funksignale zu berücksichtigen.

Die elektronische Radeinheit kann insbesondere ausgebildet sein, einen Fahrbetriebsbeginn des Fahrzeuges zu erfassen und infolge einer Erfassung des Fahrbetriebsbeginns die funktechnische Optimierung der Radüberwachung auszulösen.

Ein dritter Aspekt der Erfindung betrifft eine Steuereinrichtung für ein Radüberwachungssystem eines mit Fahrzeugrädern ausgestatteten Fahrzeuges, wobei wenigstens eines der Fahrzeugräder mit einer daran angeordneten elektronischen Radeinheit zum Erfassen wenigstens eines Radbetriebsparameters des jeweiligen Fahrzeugrades und zum Senden von Funksignalen, die eine Information über den wenigstens einen erfassten Radbetriebsparameter beinhalten, jeweils bei einer von der elektronischen Radeinheit festgelegten Raddrehstellung des Fahrzeugrades an die Steuereinrichtung ausgestattet ist, und wobei die Steuereinrichtung dazu ausgebildet ist, die Funksignale zu empfangen und auszuwerten. Die Steuereinrichtung ist ferner dazu ausgebildet, für eine funktechnische Optimierung der Radüberwachung mehrere Funksignale von der elektronischen Radeinheit zu empfangen und hinsichtlich deren jeweiliger Funksignalstärke zu bewerten und daraufhin ein Optimierungsfunksignal an die elektronische Radeinheit zu senden, wobei das Optimierungsfunksignal eine basierend auf der Bewertung der mehreren Funksignale gebildete Optimierungsinformation beinhaltet.

Die Steuereinrichtung kann insbesondere ausgebildet sein, einen Fahrbetriebsbeginn des Fahrzeuges zu erfassen und infolge einer Erfassung des Fahrbetriebsbeginns die funktechnische Optimierung der Radüberwachung auszulösen.

Die Steuereinrichtung kann zudem ausgebildet sein, ein Auslösefunksignal an die elektronische Radeinheit zu senden, um die funktechnische Optimierung der Radüberwachung auszulösen.

Die Steuereinrichtung kann ferner ausgebildet sein, fortlaufend die Funksignalstärke der mehreren empfangenen Funksignale zu bewerten und die funktechnische Optimierung der Radüberwachung durchzuführen, sobald die Funksignalstärke zumindest eines der mehreren empfangenen Funksignale einen vorbestimmten Schwellwert unterschreitet.

Die Steuereinrichtung kann darüber hinaus ausgebildet sein, zudem einen momentanen Beladungszustand des Fahrzeuges zu ermitteln und die funktechnische Optimierung der Radüberwachung durchzuführen, falls eine Änderung des momentanen Beladungszustands des Fahrzeuges ermittelt wird.

Ausführungsformen und besondere Ausgestaltungen des Optimierungsverfahrens und des zugrundeliegenden Radüberwachungsverfahrens können in entsprechender Weise als Ausführungsformen und besondere Ausgestaltungen der elektronischen Radeinheit bzw. der Steuereinrichtung vorgesehen sein und umgekehrt.

Ein weiterer Aspekt der Erfindung betrifft ein Computerprogrammprodukt, aufweisend einen Programmcode, der auf einer Datenverarbeitungseinrichtung (z. B. einer Datenverarbeitungseinrichtung der Steuereinrichtung und/oder einer Datenverarbeitungseinrichtung der elektronischen Radeinheit) ausgeführt ein Verfahren zur funktechnischen Optimierung einer Radüberwachung der hier beschriebenen Art durchführt.

Die Erfindung wird nachfolgend anhand von Ausführungsbeispielen mit Bezug auf die beigefügten Zeichnungen weiter beschrieben. Es zeigen:
- Fig. 1: eine schematische Draufsicht eines mit einem Radüberwachungssystem ausgestatteten Fahrzeuges gemäß eines Ausführungsbeispiels,
- Fig. 2: ein Blockschaltbild einer der in dem Radüberwachungssystem von Fig. 1 verwendeten elektronischen Radeinheit,
- Fig. 3: eine schematische Seitenansicht des mit der elektronischen Radeinheit von Fig. 2 ausgestatteten Fahrzeugrades und
- Fig. 4: ein Ablaufdiagramm eines von dem Radüberwachungssystem durchgeführten Verfahrens zur funktechnischen Optimierung der Radüberwachung.

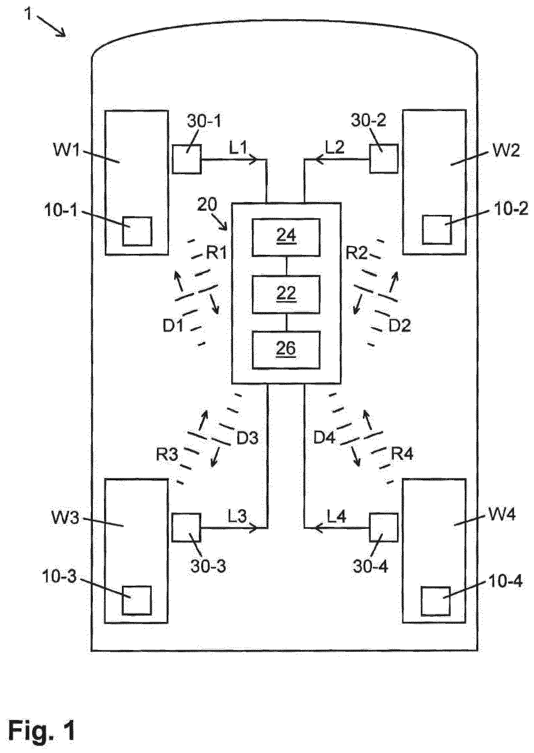

Fig. 1 zeigt ein Fahrzeug 1, hier beispielhaft einen vierrädrigen PKW mit Fahrzeugrädern W1-W4.

Jedes Fahrzeugrad W1-W4 ist mit einer daran angeordneten elektronischen Radeinheit 10-1, 10-2, 10-3 bzw. 10-4 zum Erfassen wenigstens eines Radbetriebsparameters des jeweiligen Fahrzeugrades W1, W2, W3 bzw. W4 und zum Senden entsprechender Funksignale R1, R2, R3 bzw. R4 an eine Steuereinrichtung 20 des Fahrzeuges 1 ausgestattet.

Das Senden der Funksignale R1-R4 erfolgt z. B. gemäß eines vorbestimmten Datenübertragungsprotokolls und gemäß einer die Sendezeitpunkte festlegenden Sendestrategie. Das Versenden der einzelnen Funksignale R1-R4 erfolgt hierbei jeweils bei einer von der betreffenden elektronischen Radeinheit festgelegten Raddrehstellung, wobei für jedes der Funksignale R1-R4 z. B. jeweils eine einzige Raddrehstellung vorgesehen ist oder aber mehrere verschiedene Raddrehstellungen vorgesehen sind, aus denen für jede einzelne Sendung eine konkrete Raddrehstellung ausgewählt wird.

In dem dargestellten Beispiel ist mit Hilfe der elektronischen Radeinheiten 10-1 bis 10-4 ein Reifendrucküberwachungssystem (TPMS) des Fahrzeuges 1 ausgebildet.

Dementsprechend erfassen die elektronischen Radeinheiten 10-1 bis 10-4 jeweils zumindest den Reifendruck des betreffenden FahrzeugradesW1-W4, wobei die Fahrzeugräder W1-W4 in diesem Beispiel jeweils von einer Felge mit einem daran montierten, luftgefüllten Reifen gebildet sind, und senden die elektronischen Radeinheiten 10-1 bis 10-4 mittels der Funksignale R1-R4 digital codierte Radbetriebsdaten, die zumindest eine Information über den Reifendruck enthalten, an die Steuereinrichtung 20 des Fahrzeuges 1.

Die elektronischen Radeinheiten 10-1 bis 10-4 besitzen in der gezeigten Ausführungsform einen identischen Aufbau und können z. B. an einer Innenseite einer Reifenlauffläche des jeweiligen Reifens angeordnet sein.

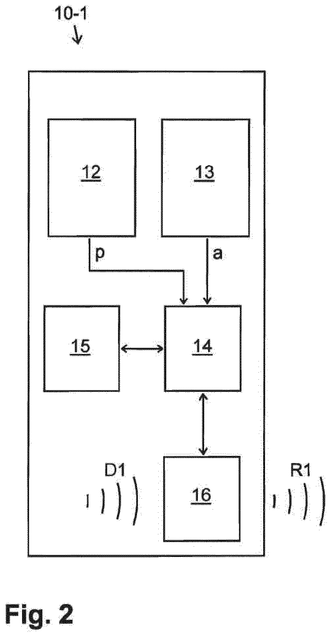

Fig. 2 zeigt beispielhaft den Aufbau der an dem Fahrzeugrad W1 angeordneten elektronischen Radeinheit 10-1. Diese beinhaltet wie auch jede der übrigen Radeinheiten 10-2 bis 10-4 einen Drucksensor 12 zur Messung des Reifendrucks und zur Bereitstellung eines den Reifendruck repräsentierenden Sensorsignals "p" und einen Beschleunigungssensor 13 zur Messung einer Radialbeschleunigung an der Anbringungsstelle der elektronischen Radeinheit 10-1 und zur Bereitstellung eines diese Radialbeschleunigung repräsentierenden Sensorsignals "a".

Die Sensorsignale "p" und "a" werden wie in Figur 2 dargestellt einer programmgesteuerten Rechnereinheit 14 zur Verarbeitung zugeführt, deren Betrieb durch einen in einer zugordneten digitalen Speichereinheit 15 gespeicherten Programmcode gesteuert wird.

Die Rechnereinheit 14 erzeugt die in Form der Funksignale R1 per Funk zu sendenden Radbetriebsdaten, welche von Zeit zu Zeit an die in Figur 1 gezeigte fahrzeugseitige Steuereinrichtung 20 gesendet werden.

Die Messung der Radialbeschleunigung und Bereitstellung des entsprechenden Sensorsignals "a" dient in dem dargestellten Beispiel dazu, anhand einer von der Rechnereinheit 14 durchgeführten Auswertung des Sensorsignalverlaufes Werte einer momentanen Raddrehstellung und Raddrehgeschwindigkeit des betreffenden Fahrzeugrades W1 zu ermitteln und entsprechende Informationen hierüber in die Funksignale R1 aufzunehmen.

Die elektronische Radeinheit 10-1 ist zudem mit einer Funksende- und Empfangseinheit 16 ausgestattet, mit der die Funksignale R1 gesendet werden.

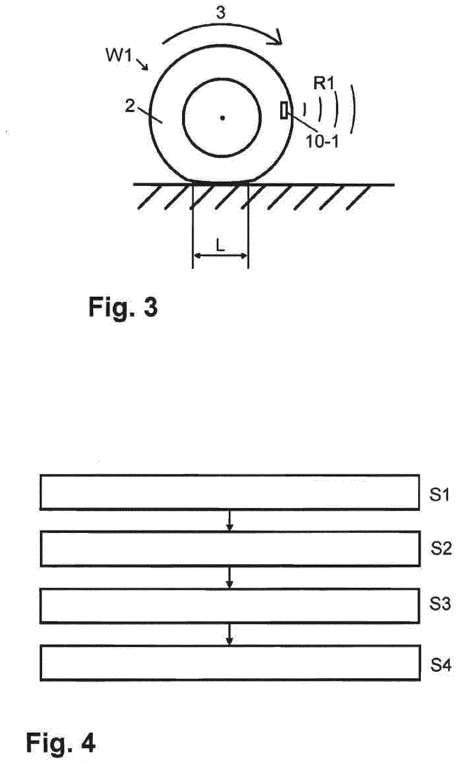

Fig. 3 veranschaulicht beispielhaft eine Anordnung der elektronischen Radeinheit 10-1 an einer Innenseite einer Reifenlauffläche eines Reifens 2 des Fahrzeugrades W1. Die Drehbewegung des Fahrzeugrades W1 während der Fahrt des Fahrzeuges 1 ist in Fig. 3 durch einen Pfeil 3 symbolisiert.

Mittels des in der elektronischen Radeinheit 10-1 integrierten Beschleunigungssensors 13 (Fig. 2) wird z. B. im Falle der Erfassung einer Radialbeschleunigung während der Fahrt ein etwa sinusförmig verlaufendes Sensorsignal "a" entsprechend der variierenden Gravitationskomponente der Beschleunigung erfasst, wobei dieser Sinusverlauf einen Offset besitzt, der durch die Zentrifugalkraft bedingt ist. Sowohl die Periode des Sinusverlaufes als auch der Offset hängen hierbei von der Raddrehgeschwindigkeit und somit der Fahrzeuggeschwindigkeit ab.

Durch eine Auswertung des Sensorsignals "a" kann sowohl die momentane Raddrehstellung als auch die momentane Raddrehgeschwindigkeit des Fahrzeugrades W1 in einfacher Weise ermittelt werden.

Alternativ oder zusätzlich kann für diese Ermittlung der in Fig. 3 angedeutete Umstand herangezogen werden, dass der Reifen 2 an seiner Reifenaufstandsfläche L etwas deformiert wird, so dass während der Drehung des Fahrzeugrades W1 bestimmte Signalcharakteristika im Sensorsignalverlauf insbesondere dann auftreten, wenn die elektronische Radeinheit 10-1 in den Bereich der Reifenaufstandsfläche eintritt und wenn die elektronische Radeinheit 10-1 aus diesem Bereich wieder austritt.

Das Auftreten dieser Signalcharakteristika markiert somit jeweils eine Raddrehstellung, bei welcher die elektronische Radeinheit 10-1 sich ganz unten an dem Fahrzeugrad W1 nahe dem Fahruntergrund befindet, was z. B. als eine Raddrehstellung von 0° (oder z. B. 180°) definiert werden kann, und der zeitliche Abstand zwischen einem aufeinanderfolgenden Auftreten der Signalcharakteristika ist repräsentativ für die momentane Raddrehgeschwindigkeit.

Zurückkommend auf Fig. 1 ist auch die Steuereinrichtung 20 des Fahrzeuges 1 mit einer Funksende- und Empfangseinheit 26 ausgestattet, mit der die Funksignale R1-R4 der elektronischen Radeinheiten 10-1 bis 10-4 empfangen werden.

Des Weiteren weist die fahrzeugseitige Steuereinrichtung 20 eine programmgesteuerte Rechnereinheit 22 zur Auswertung der in den Funksignalen R1-R4 beinhalteten Radbetriebsdaten auf, wobei der Betrieb der Rechnereinheit 22 durch einen in einer zugeordneten digitalen Speichereinheit 24 gespeicherten Programmcode gesteuert wird.

Die elektronischen Radeinheiten 10-1 bis 10-4 in Verbindung mit der Steuereinrichtung 20 bilden in dem dargestellten Beispiel das Reifendrucküberwachungssystem des Fahrzeuges 1.

Im Falle eines von der Steuereinrichtung 20 anhand der empfangenen Reifendruckdaten festgestellten Reifendruckverlusts an einem der Fahrzeugräder W1-W4 kann von der Steuereinrichtung 20 eine entsprechende Abnormalitätsmeldung bereitgestellt werden, insbesondere z. B. eine Warnung an den Fahrer des Fahrzeuges 1, z. B. über eine Mensch-Maschine-Schnittstelle des Fahrzeuges 1.

Im Rahmen dieser Radüberwachung wird von der Steuereinrichtung 20 auch eine sogenannte Lokalisierung durchgeführt, d. h. eine für die empfangenen Funksignale R1-R4 durchgeführte Zuordnung zu einer der in der gezeigten Ausführungsform vier Verbaupositionen "vorne links", "vorne rechts", "hinten links", "hinten rechts".

Für diese Lokalisierung ist in dem dargestellten Beispiel zum einen wesentlich, dass jedes Funksignal R1-R4 auch einen die jeweils sendende elektronische Radeinheit 10-1, 10-2, 10-3 bzw. 10-4 eindeutig identifizierenden Identifikationscode beinhaltet, so dass damit die von verschiedenen elektronischen Radeinheiten stammenden Funksignale R1-R4 voneinander unterschieden werden können. Zum anderen, werden für die eigentliche Zuordnung zu den genannten Verbaupositionen von der Steuereinrichtung 20 Korrelationen zwischen Raddrehstellungen und/oder Raddrehgeschwindigkeiten ermittelt und ausgewertet, die von den elektronischen Radeinheiten 10-1 bis 10-4 erfasst wurden und z. B. anhand der Sendezeitpunkte und/oder des Dateninhalts der Funksignale R1-R4 erkennbar sind, und zudem mittels fahrzeugfest angeordneter Raddrehzahlsensoren 30-1 bis 30-4 erfasst wurden. Letztere Raddrehstellungen bzw. Raddrehgeschwindigkeiten werden als leitungsgebundene Raddrehzahlsensorsignale L1 bis L4 an die Steuereinrichtung 20 übermittelt, z. B. über ein digitales Kommunikationsbussystem, wie z. B. einen CAN-Bus oder dergleichen.

Die nachfolgend anhand des dargestellten Ausführungsbeispiels beschriebene erfindungsgemäße Besonderheit bezieht sich auf ein Verfahren zur funktechnischen Optimierung der Radüberwachung bzw. die hierzu vorgesehene besondere Ausgestaltung der Steuereinrichtung 20 und der elektronischen Radeinheiten 10-1 bis 10-4.

Die funktechnische Optimierung kann in dem dargestellten Beispiel z. B. von der Steuereinrichtung 20, gesteuert durch den in der Speichereinheit 24 gespeicherten Programmcode, ausgelöst werden, z. B. insbesondere dann, wenn festgestellt wird, dass die funktechnische Qualität der Datenübertragung für zumindest eine der elektronischen Radeinheiten 10-1 bis 10-4 unter eine vorgegebene Schwelle abfällt.

Dies kann z. B. durch eine direkte Messung der empfängerseitigen Funksignalstärke der Funksignale R1-R4 und/oder anhand einer quantitativen Detektion von Datenfehlern in den Funksignalen R1-R4 festgestellt werden.

Angenommen, dieser Fall tritt für die im Rahmen der Radüberwachung gesendeten Funksignale R2 ein, die von der an dem Fahrzeugrad W2 angeordneten elektronischen Radeinheit 10-2 gesendet werden.

Die Steuereinrichtung 20 sendet dann über die Funksende- und Empfangseinheit 26 ein an die elektronische Radeinheit 10-2 adressiertes Auslösefunksignal, um die funktechnische Optimierung der Radüberwachung für das Fahrzeugrad W2 auszulösen.

Daraufhin werden mittels der elektronischen Radeinheit 10-2 z. B. in relativ kurzer zeitlicher Aufeinanderfolge mittels der Funksende- und Empfangseinheit 16 der elektronischen Radeinheit 10-2 mehrere Funksignale an die fahrzeugseitige Steuereinrichtung 20 gesendet und zwar bei von der elektronischen Radeinheit 10-2 festgelegten, voneinander verschiedenen Raddrehstellungen des Fahrzeugrades W2.

Diese für die Optimierung versendeten Funksignale beinhalten bevorzugt einen Identifikationscode der betreffenden elektronischen Radeinheit, hier der Radeinheit 10-2, und beinhalten z. B. keine Radbetriebsparameterdaten oder weniger Radbetriebsdaten als die bei der Überwachung gesendeten Funksignale R2.

Beispielsweise werden 36 solche Funksignale bei gleichmäßig über eine volle 360°-Umdrehung des Fahrzeugrades W2 verteilt vorgesehenen Raddrehstellungen gesendet, also mit einem Winkelabstand von jeweils 10° zwischen unmittelbar aufeinanderfolgenden Funksignalen.

Basierend auf einem Empfang und einer jeweiligen Ermittlung und Bewertung der Funksignalstärken seitens der Steuereinrichtung 20 bildet diese eine Optimierungsinformation, die z. B. in digital codierter Form eine Ergebnis der genannten Bewertung darstellen kann, und sendet mittels der Funksende- und Empfangseinheit 26 ein die Optimierungsinformation beinhaltendes Optimierungsfunksignal D2 zurück an die elektronische Radeinheit 10-2.

Die Optimierungsinformation kann z. B. das Ergebnis einer quantitativen Bewertung der Funksignalstärken sämtlicher 36 Funksignale angeben, wobei das Optimierungsfunksignal D2 bevorzugt außerdem den Identifikationscode der elektronischen Radeinheit 10-2 beinhaltet, so dass das Optimierungsfunksignal D2 gezielt an die betreffende elektronische Radeinheit, hier die Radeinheit 10-2, adressiert wird.

Entsprechende Optimierungsfunksignale D1, D3 bzw. D4 können im Rahmen einer funktechnischen Optimierung der Radüberwachung für die Fahrzeugräder W1, W3 bzw. W4 an die entsprechende Radeinheit 10-1, 10-3 bzw. 10-4 gesendet werden.

Die elektronische Radeinheit 10-2 empfängt das Optimierungsfunksignal D2 und berücksichtigt die darin enthaltende Optimierungsinformation bei der Festlegung der Raddrehstellung für nachfolgend im Rahmen der Radüberwachung zu sendende Funksignale R2.

Die Berücksichtigung kann z. B. darin bestehen, dass die z. B. zehn schlechtesten Raddrehstellungen mit schlecht bewerteter Funksignalstärke von den zukünftigen Festlegungen ausgeschlossen und/oder die z. B. zehn besten Raddrehstellungen mit gut bzw. am besten bewerteter Funksignalstärke bei den zukünftigen Festlegungen priorisiert werden.

Es versteht sich, dass diesbezügliche vielfältige Möglichkeiten der Berücksichtigung bestehen.

Beispielsweise könnte auch vorgesehen sein, dass die Festlegungen der Raddrehstellung für nachfolgend zu sendende Funksignale R2 stets auf diejenige einzige Raddrehstellung begrenzt wird, für welche die Funksignalstärke als am besten bewertet wurde.

Die somit abgeschlossene Justierung der zukünftigen Sendestrategie hinsichtlich der Festlegungen der Raddrehstellung wird seitens der elektronischen Radeinheit 10-2 zumindest temporär gespeichert, z. B. in der Speichereinheit 15, und wird überschrieben, sobald das Optimierungsverfahren für die Radeinheit 10-2 zu einem späteren Zeitpunkt erneut durchgeführt wird.

Die Auslösung des Optimierungsverfahrens durch die Steuereinrichtung 20 des Fahrzeuges 1 besitzt den Vorteil, dass in einfacher Weise eine zeitliche Koordinierung für den Fall erfolgen kann, dass mehr oder weniger gleichzeitig Optimierungen mehrerer der hier z.B. insgesamt vier vorhandenen elektronischen Radeinheiten 10-1 bis 10-4 durchgeführt werden sollen.

Die Steuereinrichtung 20 kann in diesem Fall gesteuert durch den in der Speichereinheit 24 gespeicherten Programmcode die durchzuführenden mehreren Optimierungen nacheinander bewerkstelligen, d.h. abarbeiten, um so Funksignalkollisionen zu vermeiden.

Abweichend von diesem Ausführungsbeispiel könnte alternativ oder zusätzlich auch eine Auslösbarkeit der funktechnischen Optimierung durch die elektronischen Radeinheiten 10-1 bis 10-4 vorgesehen sein, wobei im Falle einer solchen Auslösung jedoch bevorzugt die Optimierung der betreffenden elektronischen Radeinheit nicht unmittelbar begonnen wird, sondern hierbei bevorzugt mittels eines von der elektronischen Radeinheit gesendeten Anforderungsfunksignals die Optimierung zunächst bei der Steuereinrichtung 20 angefordert wird, woraufhin die Steuereinrichtung 20 erst ein Auslösefunksignal der bereits erwähnten Art an die betreffende elektronische Radeinheit sendet, um die Optimierung tatsächlich auszulösen. Damit kann die Steuereinrichtung 20 im Falle eines im Wesentlichen gleichzeitigen Empfangs mehrerer Anforderungsfunksignale eine zeitliche Koordination der mehreren durchzuführenden Optimierungen vornehmen, um Funksignalkollisionen zu vermeiden.

Fig. 4 veranschaulicht nochmals die in dem beschriebenen Beispiel ausgeführten wesentlichen Schritte des Optimierungsverfahrens.

In einem Schritt S1 werden mittels der betreffenden elektronischen Radeinheit mehrere Funksignale mit oder ohne Radbetriebsdaten bei festgelegten, voneinander verschiedenen Raddrehstellungen gesendet.

In einem Schritt S2 werden diese Funksignale mittels der Steuereinrichtung empfangen und hinsichtlich deren jeweiliger Funksignalstärken bewertet.

In einem Schritt S3 wird mittels der Steuereinrichtung ein Optimierungsfunksignal gesendet, das eine basierend auf der Bewertung der mehreren Funksignale gebildete Optimierungsinformation beinhaltet.

In einem Schritt S4 wird schließlich mittels der elektronischen Radeinheit das Optimierungsfunksignal empfangen und die darin enthaltende Optimierungsinformation bei der Festlegung der Raddrehstellung für nachfolgend bei der Radüberwachung zu sendende Funksignale berücksichtigt.

### Bezugszeichenliste

- 1: Fahrzeug
- 2: Reifen
- 3: Pfeil
- W1 bis W4: Fahrzeugräder
- 10-1 bis 10-4: Radeinheiten
- R1 bis R4: Funksingale
- 12: Drucksensor
- p: Sensorsignal
- 13: Beschleunigungssensor
- a: Sensorsignal
- 14: Rechnereinheit
- 15: Speichereinheit
- 16: Funksende- und Empfangseinheit
- 20: Steuereinrichtung
- 22: Rechnereinheit
- 24: Speichereinheit
- 26: Funksende- und Empfangseinheit
- 30-1 bis 30-4: Raddrehzahlsensoren
- L1 bis L4: Raddrehzahlsensorsignale
- D1 bis D4: Optimierungsfunksignale
- L: Reifenaufstandsfläche
- S1: Schritt
- S2: Schritt
- S3: Schritt
- S4: Schritt

## Patentansprüche

1. Verfahren zur funktechnischen Optimierung einer Radüberwachung in einem mit Fahrzeugrädern (W1-W4) ausgestatteten Fahrzeug (1), wobei zur Überwachung wenigstens eines der Fahrzeugräder (W1-W4) von einer an dem betreffenden Fahrzeugrad (W1-W4) angeordneten elektronischen Radeinheit (10-1 bis 10-4) wenigstens ein Radbetriebsparameter des Fahrzeugrades (W1-W4) erfasst wird und Funksignale (R1-R4), die eine Information über den wenigstens einen erfassten Radbetriebsparameter beinhalten, jeweils bei einer von der elektronischen Radeinheit (10-1 bis 10-4) festgelegten Raddrehstellung des Fahrzeugrades (W1-W4) gesendet werden, wobei die Funksignale (R1-R4) von einer Steuereinrichtung (20) des Fahrzeuges (1) empfangen und ausgewertet werden,
**dadurch gekennzeichnet, dass** für die funktechnische Optimierung der Radüberwachung während eines Betriebs des Fahrzeuges (1) mittels der elektronischen Radeinheit (10-1 bis 10-4) mehrere Funksignale bei voneinander verschiedenen Raddrehstellungen des Fahrzeugrades (W1-W4) gesendet werden, wobei die mehreren Funksignale mittels der Steuereinrichtung (20) empfangen und hinsichtlich deren jeweiliger Funksignalstärke bewertet werden, wobei mittels der Steuereinrichtung (20) ein Optimierungsfunksignal (D1-D4) an die elektronische Radeinheit (10-1 bis 10-4) gesendet wird, wobei das Optimierungsfunksignal (D1-D4) eine basierend auf der Bewertung der mehreren Funksignale gebildete Optimierungsinformation beinhaltet, und wobei mittels der elektronischen Radeinheit (10-1 bis 10-4) das Optimierungsfunksignal (D1-D4) empfangen und die darin enthaltende Optimierungsinformation bei der Festlegung der Raddrehstellung des Fahrzeugrades (W1-W4) für nachfolgend zu sendende Funksignale (R1-R4) berücksichtigt wird.

2. Verfahren nach Anspruch 1, wobei mittels der elektronischen Radeinheit (10-1 bis 10-4) und/oder der Steuereinrichtung (20) ein Fahrbetriebsbeginn des Fahrzeuges (1) erfasst wird und infolge einer Erfassung des Fahrbetriebsbeginns die funktechnische Optimierung der Radüberwachung ausgelöst wird.

3. Verfahren nach einem der vorangehenden Ansprüche, wobei mittels der Steuereinrichtung (20) ein Auslösefunksignal an die elektronische Radeinheit (10-1 bis 10-4) gesendet wird, um die funktechnische Optimierung der Radüberwachung auszulösen.

4. Verfahren nach einem der vorangehenden Ansprüche, wobei bei der Radüberwachung mittels der Steuereinrichtung (20) fortlaufend die Funksignalstärke der mehreren empfangenen Funksignale bewertet wird und wobei die Schritte für die funktechnische Optimierung der Radüberwachung durchgeführt werden, sobald die Funksignalstärke zumindest eines der mehreren empfangenen Funksignale einen vorbestimmten Schwellwert unterschreitet.

5. Verfahren nach einem der vorangehenden Ansprüche, wobei zudem ein momentaner Beladungszustand des Fahrzeuges (1) ermittelt wird und wobei die Schritte für die funktechnische Optimierung der Radüberwachung durchgeführt werden, falls eine Änderung des momentanen Beladungszustands des Fahrzeuges (1) ermittelt wird.

6. Verfahren nach einem der vorangehenden Ansprüche, wobei die Bewertung der mehreren Funksignale mittels der Steuereinrichtung (20) eine Messung der jeweiligen Funksignalstärke der mehreren Funksignale und/oder eine Erfassung einer Datenfehlerrate beinhaltet.

7. Elektronische Radeinheit (10-1 bis 10-4) für ein Radüberwachungssystem eines mit Fahrzeugrädern (W1-W4) ausgestatteten Fahrzeuges (1), wobei die elektronische Radeinheit (10-1 bis 10-4) dazu ausgebildet ist, an einem der Fahrzeugräder (W1-W4) angeordnet wenigstens einen Radbetriebsparameter des Fahrzeugrades (W1-W4) zu erfassen und Funksignale (R1-R4), die eine Information über den wenigstens einen erfassten Radbetriebsparameter beinhalten, jeweils bei einer von der elektronischen Radeinheit (10-1 bis 10-4) festgelegten Raddrehstellung des Fahrzeugrades an eine zum Empfangen und Auswerten der Funksignale ausgebildete Steuereinrichtung (20) des Fahrzeuges (1) zu senden,
**dadurch gekennzeichnet, dass** die elektronische Radeinheit (10-1 bis 10-4) ferner dazu ausgebildet ist, für eine funktechnische Optimierung der Radüberwachung mehrere Funksignale bei voneinander verschiedenen Raddrehstellungen des Fahrzeugrades (W1-W4) zu senden und ein daraufhin von der Steuereinrichtung (20) gesendetes Optimierungsfunksignal (D1-D4) zu empfangen und eine darin enthaltende Optimierungsinformation bei der Festlegung der Raddrehstellung des Fahrzeugrades (W1-W4) für nachfolgend zu sendende Funksignale (R1-R4) zu berücksichtigen.

8. Elektronische Radeinheit (10-1 bis 10-4) nach Anspruch 7, wobei die elektronische Radeinheit (10-1 bis 10-4) ausgebildet ist, einen Fahrbetriebsbeginn des Fahrzeuges (1) zu erfassen und infolge einer Erfassung des Fahrbetriebsbeginns die funktechnische Optimierung der Radüberwachung auszulösen.

9. Steuereinrichtung (20) für ein Radüberwachungssystem eines mit Fahrzeugrädern (W1-W4) ausgestatteten Fahrzeuges (1), wobei wenigstens eines der Fahrzeugräder (W1-W4) mit einer daran angeordneten elektronischen Radeinheit (10-1 bis 10-4) zum Erfassen wenigstens eines Radbetriebsparameters des jeweiligen Fahrzeugrades (W1-W4) und zum Senden von Funksignalen (R1-R4), die eine Information über den wenigstens einen erfassten Radbetriebsparameter beinhalten, jeweils bei einer von der elektronischen Radeinheit (10-1 bis 10-4) festgelegten Raddrehstellung des Fahrzeugrades (W1-W4) an die Steuereinrichtung (20) ausgestattet ist, und wobei die Steuereinrichtung (20) dazu ausgebildet ist, die Funksignale zu empfangen und auszuwerten,
**dadurch gekennzeichnet, dass** die Steuereinrichtung (20) ferner dazu ausgebildet ist, für eine funktechnische Optimierung der Radüberwachung mehrere Funksignale von der elektronischen Radeinheit (10-1 bis 10-4) zu empfangen und hinsichtlich deren jeweiliger Funksignalstärke zu bewerten und daraufhin ein Optimierungsfunksignal (D1-D4) an die elektronische Radeinheit (10-1 bis 10-4) zu senden, wobei das Optimierungsfunksignal (D1-D4) eine basierend auf der Bewertung der mehreren Funksignale gebildete Optimierungsinformation beinhaltet.

10. Steuereinrichtung (20) nach Anspruch 9, wobei die Steuereinrichtung (20) ausgebildet ist, einen Fahrbetriebsbeginn des Fahrzeuges (1) zu erfassen und infolge einer Erfassung des Fahrbetriebsbeginns die funktechnische Optimierung der Radüberwachung auszulösen.

11. Steuereinrichtung (20) nach Anspruch 9 oder 10, wobei die Steuereinrichtung (20) ausgebildet ist, ein Auslösefunksignal an die elektronische Radeinheit (10-1 bis 10-4) zu senden, um die funktechnische Optimierung der Radüberwachung auszulösen.

12. Steuereinrichtung (20) nach einem der Ansprüche 9 bis 11, wobei die Steuereinrichtung (20) ausgebildet ist, fortlaufend die Funksignalstärke der mehreren empfangenen Funksignale zu bewerten und die funktechnische Optimierung der Radüberwachung durchzuführen, sobald die Funksignalstärke zumindest eines der mehreren empfangenen Funksignale einen vorbestimmten Schwellwert unterschreitet.

13. Steuereinrichtung (20) nach einem der Ansprüche 9 bis 12, wobei die Steuereinrichtung (20) ausgebildet ist, zudem einen momentanen Beladungszustand des Fahrzeuges (1) zu ermitteln und die funktechnische Optimierung der Radüberwachung durchzuführen, falls eine Änderung des momentanen Beladungszustands des Fahrzeuges (1) ermittelt wird.

14. Radüberwachungssystem (10-1 bis 10-4, 20) eines mit Fahrzeugrädern (W1-W4) ausgestatteten Fahrzeuges, aufweisend wenigstens eine elektronische Radeinheit (10-1 bis 10-4) nach Anspruch 7 oder 8 und eine Steuereinrichtung (20) nach einem der Ansprüche 9 bis 13.

15. Computerprogrammprodukt aufweisend einen Programmcode, der auf einer elektronischen Radeinheit nach Anspruch 7 oder 8 und einer Steuereinrichtung nach einem der Ansprüche 9 bis 13 ausgeführt ein Verfahren nach einem der Ansprüche 1 bis 6 ausführt.

## Claims

1. Method for the radio-oriented optimization of wheel monitoring in a vehicle (1) equipped with vehicle wheels (W1-W4), wherein the monitoring of at least one of the vehicle wheels (W1-W4) is prompted by an electronic wheel unit (10-1 to 10-4) arranged on the relevant vehicle wheel (W1-W4) capturing at least one wheel operating parameter of the vehicle wheel (W1-W4), and radio signals (R1-R4) containing information about the at least one captured wheel operating parameter being transmitted for a respective wheel rotational position of the vehicle wheel (W1-W4), stipulated by the electronic wheel unit (10-1 to 10-4), wherein the radio signals (R1-R4) are received and evaluated by a control device (20) of the vehicle (1),
**characterized in that** the radio-oriented optimization of the wheel monitoring is prompted during operation of the vehicle (1) by the electronic wheel unit (10-1 to 10-4) being used to transmit multiple radio signals for different wheel rotational positions of the vehicle wheel (W1-W4), wherein the multiple radio signals are received by means of the control device (20) and rated in respect of their respective radio signal strength, wherein the control device (20) is used to transmit an optimization radio signal (D1-D4) to the electronic wheel unit (10-1 to 10-4), wherein the optimization radio signal (D1-D4) contains optimization information formed on the basis of the rating of the multiple radio signals, and wherein the electronic wheel unit (10-1 to 10-4) is used to receive the optimization radio signal (D1-D4), and the optimization information contained therein is taken into consideration for the stipulation of the wheel rotational position of the vehicle wheel (W1-W4) for radio signals (R1-R4) that are subsequently to be transmitted.

2. Method according to Claim 1, wherein the electronic wheel unit (10-1 to 10-4) and/or the control device (20) is/are used to detect the beginning of a driving mode of the vehicle (1), and the radio-oriented optimization of the wheel monitoring is triggered as a result of detection of the beginning of the driving mode.

3. Method according to either of the preceding claims, wherein the control device (20) is used to transmit a trigger radio signal to the electronic wheel unit (10-1 to 10-4) in order to trigger the radio-oriented optimization of the wheel monitoring.

4. Method according to one of the preceding claims, wherein the wheel monitoring results in the control device (20) being used to continuously rate the radio signal strength of the multiple received radio signals and wherein the steps for the radio-oriented optimization of the wheel monitoring are performed as soon as the radio signal strength of at least one of the multiple received radio signals is below a predetermined threshold value.

5. Method according to one of the preceding claims, wherein an instantaneous loaded state of the vehicle (1) is also ascertained and wherein the steps for the radio-oriented optimization of the wheel monitoring are performed if a change in the instantaneous loaded state of the vehicle (1) is ascertained.

6. Method according to one of the preceding claims, wherein the rating of the multiple radio signals by means of the control device (20) contains a measurement of the respective radio signal strength of the multiple radio signals and/or a detection of a data error rate.

7. Electronic wheel unit (10-1 to 10-4) for a wheel monitoring system of a vehicle (1) equipped with vehicle wheels (W1-W4), wherein the electronic wheel unit (10-1 to 10-4) is designed to capture, while being arranged on one of the vehicle wheels (W1-W4), at least one wheel operating parameter of the vehicle wheel (W1-W4) and to transmit radio signals (R1-R4) containing information about the at least one captured wheel operating parameter to a control device (20), designed for receiving and evaluating the radio signals, of the vehicle (1) for a respective wheel rotational position of the vehicle wheel, stipulated by the electronic wheel unit (10-1 to 10-4),
**characterized in that** the electronic wheel unit (10-1 to 10-4) is further designed to prompt radio-oriented optimization of the wheel monitoring by transmitting multiple radio signals for different wheel rotational positions of the vehicle wheel (W1-W4) and receiving an optimization radio signal (D1-D4) then transmitted by the control device (20) and taking into consideration optimization information contained in said optimization radio signal for the stipulation of the wheel rotational position of the vehicle wheel (W1-W4) for radio signals (R1-R4) that are subsequently to be transmitted.

8. Electronic wheel unit (10-1 to 10-4) according to Claim 7, wherein the electronic wheel unit (10-1 to 10-4) is designed to detect the beginning of a driving mode of the vehicle (1) and to trigger the radio-oriented optimization of the wheel monitoring as a result of detection of the beginning of the driving mode.

9. Control device (20) for a wheel monitoring system of a vehicle (1) equipped with vehicle wheels (W1-W4), wherein at least one of the vehicle wheels (W1-W4) is equipped with an electronic wheel unit (10-1 to 10-4), arranged thereon, for capturing at least one wheel operating parameter of the respective vehicle wheel (W1-W4) and for transmitting radio signals (R1-R4), which contain information about the at least one captured wheel operating parameter, to the control device (20) for a respective wheel rotational position of the vehicle wheel (W1-W4), stipulated by the electronic wheel unit (10-1 to 10-4), and wherein the control device (20) is designed to receive and evaluate the radio signals,
**characterized in that** the control device (20) is further designed to prompt radio-oriented optimization of the wheel monitoring by receiving multiple radio signals from the electronic wheel unit (10-1 to 10-4) and rating them in respect of their respective radio signal strength and then transmitting an optimization radio signal (D1-D4) to the electronic wheel unit (10-1 to 10-4), wherein the optimization radio signal (D1-D4) contains optimization information formed on the basis of the rating of the multiple radio signals.

10. Control device (20) according to Claim 9, wherein the control device (20) is designed to detect the beginning of a driving mode of the vehicle (1) and to trigger the radio-oriented optimization of the wheel monitoring as a result of detection of the beginning of the driving mode.

11. Control device (20) according to Claim 9 or 10, wherein the control device (20) is designed to transmit a trigger radio signal to the electronic wheel unit (10-1 to 10-4) in order to trigger the radio-oriented optimization of the wheel monitoring.

12. Control device (20) according to one of Claims 9 to 11, wherein the control device (20) is designed to continuously rate the radio signal strength of the multiple received radio signals and to perform the radio-oriented optimization of the wheel monitoring as soon as the radio signal strength of at least one of the multiple received radio signals is below a predetermined threshold value.

13. Control device (20) according to one of Claims 9 to 12, wherein the control device (20) is designed to also ascertain an instantaneous loaded state of the vehicle (1) and to perform the radio-oriented optimization of the wheel monitoring if a change in the instantaneous loaded state of the vehicle (1) is ascertained.

14. Wheel monitoring system (10-1 to 10-4, 20) of a vehicle equipped with vehicle wheels (W1-W4), having at least one electronic wheel unit (10-1 to 10-4) according to Claim 7 or 8 and a control device (20) according to one of Claims 9 to 13.

15. Computer program product having a program code that, when executed on an electronic wheel unit according to Claim 7 or 8 and a control device according to one of Claims 9 to 13, carries out a method according to one of Claims 1 to 6.

## Revendications

1. Procédé d'optimisation par voie radio d'une surveillance de roue dans un véhicule (1) équipé de roues de véhicule (W1-W4), dans lequel, pour la surveillance d'au moins l'une des roues de véhicule (W1-W4), une unité de roue électronique (10-1 à 10-4), disposée sur la roue de véhicule (W1-W4) concernée, détecte au moins un paramètre de fonctionnement de roue de la roue de véhicule (W1-W4) et envoie des signaux radio (R1-R4) qui contiennent une information sur ledit au moins un paramètre de fonctionnement de roue détecté, pour une position de rotation de roue respective de la roue de véhicule (W1-W4) définie par l'unité de roue électronique (10-1 à 10-4), les signaux radio (R1-R4) étant reçus et évalués par un dispositif de commande (20) du véhicule (1),
**caractérisé en ce que** pour l'optimisation par voie radio de la surveillance de roue pendant un fonctionnement du véhicule (1), plusieurs signaux radio sont envoyés au moyen de l'unité de roue électronique (10-1 à 10-4) pour des positions de rotation de roue différentes les unes des autres de la roue de véhicule (W1-W4), les plusieurs signaux radio étant reçus au moyen du dispositif de commande (20) et évalués en ce qui concerne l'intensité de signal radio respective, le dispositif de commande (20) envoyant un signal radio d'optimisation (D1-D4) à l'unité de roue électronique (10-1 à 10-4), le signal radio d'optimisation (D1-D4) contenant une information d'optimisation formée sur la base de l'évaluation des plusieurs signaux radio, et l'unité de roue électronique (10-1 à 10-4) recevant le signal radio d'optimisation (D1-D4) et tenant compte de l'information d'optimisation contenue dans celui-ci pour la définition de la position de rotation de roue de la roue de véhicule (W1-W4) pour des signaux radio (R1-R4) à envoyer par la suite.

2. Procédé selon la revendication 1, dans lequel l'unité de roue électronique (10-1 à 10-4) et/ou le dispositif de commande (20) détecte(nt) un début de mode de conduite du véhicule (1), et suite à une détection du début de mode de conduite, l'optimisation par voie radio de la surveillance de roue est déclenchée.

3. Procédé selon l'une quelconque des revendications précédentes, dans lequel le dispositif de commande (20) envoie un signal radio de déclenchement à l'unité de roue électronique (10-1 à 10-4) afin de déclencher l'optimisation par voie radio de la surveillance de roue.

4. Procédé selon l'une quelconque des revendications précédentes, dans lequel, lors de la surveillance de roue au moyen du dispositif de commande (20), l'intensité de signal radio des plusieurs signaux radio reçus est évaluée en continu, et dans lequel les étapes destinées à l'optimisation par voie radio de la surveillance de roue sont effectuées dès que l'intensité de signal radio d'au moins l'un des plusieurs signaux radio reçus est inférieure à une valeur seuil prédéterminée.

5. Procédé selon l'une quelconque des revendications précédentes, dans lequel par ailleurs un état de chargement momentané du véhicule (1) est déterminé, et dans lequel les étapes destinées à l'optimisation par voie radio de la surveillance de roue sont effectuées si une variation de l'état de chargement momentané du véhicule (1) est déterminée.

6. Procédé selon l'une quelconque des revendications précédentes, dans lequel l'évaluation des plusieurs signaux radio au moyen du dispositif de commande (20) comprend une mesure de l'intensité de signal radio respective des plusieurs signaux radio et/ou une détection d'un taux d'erreurs de données.

7. Unité de roue électronique (10-1 à 10-4) pour un système de surveillance de roue d'un véhicule (1) équipé de roues de véhicule (W1-W4), l'unité de roue électronique (10-1 à 10-4), disposée sur l'une des roues de véhicule (W1-W4), étant réalisée pour détecter au moins un paramètre de fonctionnement de roue de la roue de véhicule (W1-W4) et pour envoyer des signaux radio (R1-R4) qui contiennent une information sur ledit au moins un paramètre de fonctionnement de roue détecté, respectivement pour une position de rotation de roue définie par l'unité de roue électronique (10-1 à 10-4) de la roue de véhicule, à un dispositif de commande (20) du véhicule (1) réalisé pour recevoir et évaluer les signaux radio,
**caractérisée en ce que** l'unité de roue électronique (10-1 à 10-4) est en outre réalisée, en vue d'une optimisation par voie radio de la surveillance de roue, pour envoyer plusieurs signaux radio pour des positions de rotation de roue différentes les unes des autres de la roue de véhicule (W1-W4), et pour recevoir un signal radio d'optimisation (D1-D4) envoyé ensuite par le dispositif de commande (20) et pour tenir compte d'une information d'optimisation contenue dans celui-ci lors de la définition de la position de rotation de roue de la roue de véhicule (W1-W4) pour des signaux radio (R1-R4) à envoyer par la suite.

8. Unité de roue électronique (10-1 à 10-4) selon la revendication 7, l'unité de roue électronique (10-1 à 10-4) étant réalisée pour détecter un début de mode de conduite du véhicule (1) et pour déclencher l'optimisation par voie radio de la surveillance de roue suite à une détection du début de mode de conduite.

9. Dispositif de commande (20) pour un système de surveillance de roue d'un véhicule (1) équipé de roues de véhicule (W1-W4), dans lequel au moins l'une des roues de véhicule (W1-W4) est équipée d'une unité de roue électronique (10-1 à 10-4) disposée sur celle-ci pour détecter au moins un paramètre de fonctionnement de roue de la roue de véhicule (W1-W4) et pour envoyer au dispositif de commande (20) des signaux radio (R1-R4) qui contiennent une information sur ledit au moins un paramètre de fonctionnement de roue détecté pour une position de rotation de roue respective de la roue de véhicule (W1-W4), définie par l'unité de roue électronique (10-1 à 10-4), et le dispositif de commande (20) étant réalisé pour recevoir et évaluer les signaux radio,
**caractérisé en ce qu'**en vue d'une optimisation par voie radio de la surveillance de roue, le dispositif de commande (20) est en outre réalisé pour recevoir plusieurs signaux radio de l'unité de roue électronique (10-1 à 10-4) et pour les évaluer en ce qui concerne leur intensité de signal radio respective, et pour envoyer ensuite un signal radio d'optimisation (D1-D4) à l'unité de roue électronique (10-1 à 10-4), le signal radio d'optimisation (D1-D4) contenant une information d'optimisation formée sur la base de l'évaluation des plusieurs signaux radio.

10. Dispositif de commande (20) selon la revendication 9, le dispositif de commande (20) étant réalisé pour détecter un début de mode de conduite du véhicule (1) et pour déclencher l'optimisation par voie radio de la surveillance de roue suite à une détection du début de mode de conduite.

11. Dispositif de commande (20) selon la revendication 9 ou 10, le dispositif de commande (20) étant réalisé pour envoyer un signal radio de déclenchement à l'unité de roue électronique (10-1 à 10-4) afin de déclencher l'optimisation par voie radio de la surveillance de roue.

12. Dispositif de commande (20) selon l'une quelconque des revendications 9 à 11, le dispositif de commande (20) étant réalisé pour évaluer en continu l'intensité de signal radio des plusieurs signaux radio reçus et pour effectuer l'optimisation par voie radio de la surveillance de roue dès que l'intensité de signal radio d'au moins l'un des plusieurs signaux radio reçus est inférieure à une valeur seuil prédéterminée.

13. Dispositif de commande (20) selon l'une quelconque des revendications 9 à 12, le dispositif de commande (20) étant réalisé pour déterminer en outre un état de chargement momentané du véhicule (1) et pour effectuer l'optimisation par voie radio de la surveillance de roue si une variation de l'état de chargement momentané du véhicule (1) est déterminée.

14. Système de surveillance de roue (10-1 à 10-4, 20) d'un véhicule équipé de roues de véhicule (W1-W4), présentant au moins une unité de roue électronique (10-1 à 10-4) selon la revendication 7 ou 8 et un dispositif de commande (20) selon l'une quelconque des revendications 9 à 13.

15. Produit de programme informatique, présentant du code programme qui, lorsqu'il est exécuté sur une unité de roue électronique selon la revendication 7 ou 8 et un dispositif de commande selon l'une quelconque des revendications 9 à 13, exécute un procédé selon l'une quelconque des revendications 1 à 6.
